# EUROPEAN PATENT APPLICATION

(11) **EP 1 752 038 A2**
(43) Date of publication of application: **14.02.2007**
(21) Application number: 06005278.4
(22) Date of filing: 15.03.2006
(51) Int. Cl.: A01G 9/10, A01C 11/02

(54) **Apparatuses for extracting vegetable crops from containers**

(30) Priority: 15.03.2005 IT MO20050059
(71) Applicant: GORRA, Giulia, 29010 Alseno PC (IT)
(72) Inventor: GORRA, Giulia, 29010 Alseno PC (IT)
(74) Representative: Leonelli, Pietro

(57) **Abstract**

An apparatus comprises extracting means (5) for extracting from containers (28) vegetable crops (30) provided with cakes of earth (31) inserted into recesses (36) of said containers (28), said containers (28) having a bottom wall (51) and an opening (100) opposite said bottom wall (51) from which protrudes an epigeal part (101) of said vegetable crop (30), said extracting means (5) being such as to act from the exterior through said bottom wall (51) to push said cakes of earth (30) outside the respective opening (100).

## Description

The invention relates to apparatuses for extracting vegetable crops from containers, in particular vegetable crops provided with cakes of earth, and for transferring the vegetable crops to devices that plant the vegetable crops in the ground.

In agricultural practice, a cultivation method is known that provides for sowing vegetable crops directly in a plot of land in which the vegetable crops remain until they have borne fruit.

A further method is known that provides for sowing vegetable crops in containers, for example alveolar containers provided with a plurality of recesses, to obtain plants and subsequently transplant the plants, together with cakes of earth in which the plants were grown, when the plants have reached a set height.

The method that discloses transplanting the plants is preferable inasmuch as plants that are bedded in a certain plot of land, having grown in a substantially protected environment, are able to better withstand the attacks of the parasites with respect to plants born from seeds sowed directly into the aforementioned plot of land.

This method discloses removing each plant from a corresponding recess of the alveolar container and subsequently bedding the plant, the roots of which are still wrapped in a cake of earth, for example peat, used as a substratum for the growth of the plant.

Apparatuses are known for extracting plants from alveolar containers that are provided with expellers, oscillating arms and conveyor belts.

The expellers remove the plants from the alveolar containers and direct the plants to the oscillating arms that grasp the plants, disengaging the plants from the expellers.

The expellers comprise elongated elements provided with grippers at an end thereof that penetrate inside the alveolar containers, in a zone thereof from which the stems and/or the leaves of the plants protrude, remove from the recesses the plants and the cakes of earth associated therewith.

The oscillating arms, for example 10 or 12 in number, are provided at an end thereof with needles or grippers arranged for firmly retaining the plants.

The plants, removed from the alveolar containers, are then amassed on conveyor belts that convey the plants to devices that plant the plants in the ground.

A drawback of known apparatuses is the reduced removal speed of the oscillating arms, which is mainly due to the significant weight thereof.

In fact, as the moving parts of the oscillating arms have considerable mass, considerable inertia forces are generated during operation that impose great limits on removal speed to prevent damage to the apparatus.

Furthermore, as the known apparatuses are provided with a limited number of oscillating arms to limit the forces of inertia, they enable only a small number of plants to be removed each time, significantly increasing the time necessary for planting.

Then in known apparatuses, plants, once they are extracted from the containers, are thrown roughly and in a disorderly manner onto the conveyor belts.

This may damage the roots of the plants, compromising, sometimes irremediably, the subsequent life of the latter.

Known apparatuses are furthermore particularly complex and costly inasmuch as they need many moving parts.

An object of the invention is to improve the apparatuses for extracting from containers vegetable crops raised in cakes of earth.

Another object is to realize apparatuses that enable a greater number of vegetable crops to be removed from containers during each operating cycle with respect to known apparatuses.

A still further object is to obtain apparatuses that remove vegetable crops from containers gently.

A further object is to produce apparatuses that are simple to realize and have a limited cost.

In a first aspect of the invention, an apparatus is provided comprising extracting means for extracting from containers vegetable crops provided with cakes of earth inserted into recesses of said containers, said containers having a bottom wall and an opening opposite said bottom wall from which protrudes an epigeal part of said vegetable crop, characterised in that said extracting means is such as to act from the exterior through said bottom wall to push said cakes of earth outside the respective opening.

In an embodiment of the invention, said apparatus comprises removing means for removing said vegetable crops from said extracting means, said removing means comprising abutting means suitable for interacting with said cakes of earth so as to disengage said vegetable crops from said extracting means.

Owing to this aspect of the invention it is possible to obtain apparatuses for extracting vegetable crops from containers that are able to remove a great number of plants during each operating cycle, reducing the time required for planting.

In fact, as the abutting means can be fixed, the inertia forces are not generated that limit the extraction speed of the plants and which, in known apparatuses, force the number of oscillating arms that remove the plants from the extracting means and thus the total number of these extracting means to be limited.

On the other hand, in the apparatus according to this aspect of the invention, the extracting means is provided with a plurality of needle-shaped elements that enable a noticeably greater number of plants to be removed simultaneously compared with the number of plants removed in known apparatuses.

Owing to this aspect of the invention it is furthermore possible to realize an apparatus that is easy to build and has a limited cost, inasmuch as it is provided with few moving parts.

In addition, it is possible to deposit the plants gently on conveyor belts associated with the apparatus, avoiding violent impacts that could damage the roots of the plants.

In a second aspect of the invention, an apparatus is provided comprising extracting means for extracting vegetable crops from containers provided with cakes of earth and removing means for removing said vegetable crops from said extracting means and delivering the vegetable crops to conveying means, characterised in that said conveying means is provided with separating means for keeping separate adjacent vegetable crops on said conveying means.

Owing to this aspect of the invention, it is possible to obtain apparatuses that enable the plants to be arranged in an orderly manner on conveying means, preventing damage to the plants.

In fact, the plants, after being removed from the containers that house them, are deposited in suitable housings provided in the conveying means that enable adjacent plants to be separated from one another.

The plants received in the aforementioned housings are transferred as far as an inserting device arranged for planting the plants in the ground.

In this way the plants are not superimposed on one another on the conveying means, making subsequent handling easier.

In fact, as each plant is spaced from the adjacent plants, it can easily be grasped by the inserting device.

The invention can be better understood and implemented with reference to the enclosed drawings, that show some exemplifying and non limitative embodiments thereof, in which:
Figure 1 is a side perspective view of an apparatus for extracting vegetable crops from containers with some elements removed for better highlighting others thereof;

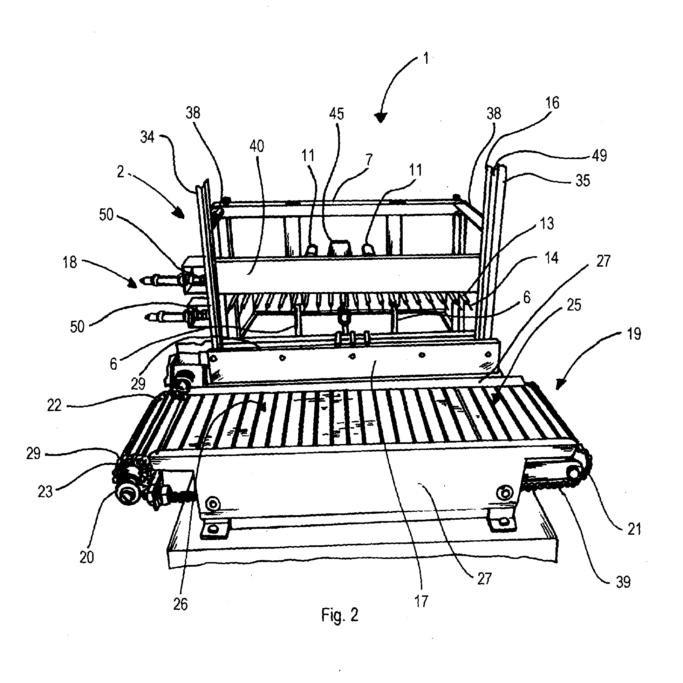

Figure 2 is a frontal perspective view of the apparatus in Figure 1;
Figure 3 is a schematic section of the apparatus in Figure 1 shown in a first operating configuration;
Figure 4 is a section like the one in Figure 3, that shows the apparatus in a second operating configuration;
Figure 5 is a section like the one in Figure 3, that shows the apparatus in a third operating configuration;
Figure 6 is a section like the one in Figure 3, that shows the apparatus in a fourth operating configuration;
Figure 7 is a section like the one in Figure 3, that shows the apparatus in a fifth operating configuration;
Figure 8 is a schematic section of a further embodiment of the apparatus in Figure 1, in a first work position;
Figure 9 is a section like the one in Figure 8 that shows the further embodiment of the apparatus 1 in a second work position;
Figure 9a is a section like the one in Figure 8 that shows the further embodiment of the apparatus 1 in a third work position;
Figure 10 is a section like the one in Figure 8 that shows the further embodiment of the apparatus 1 in a fourth work position;
Figure 11 is a section like the one in Figure 8 that shows the further embodiment of the apparatus 1 in a fifth work position;
Figure 12 is a section like the one in- Figure 8 that shows the further embodiment of the apparatus 1 in a sixth work position;
Figure 13 is a side schematic view of a detecting device included in the apparatus in Figure 1;
Figure 14 is a frontal schematic view of a conveying device associated with the apparatus in Figure 1.

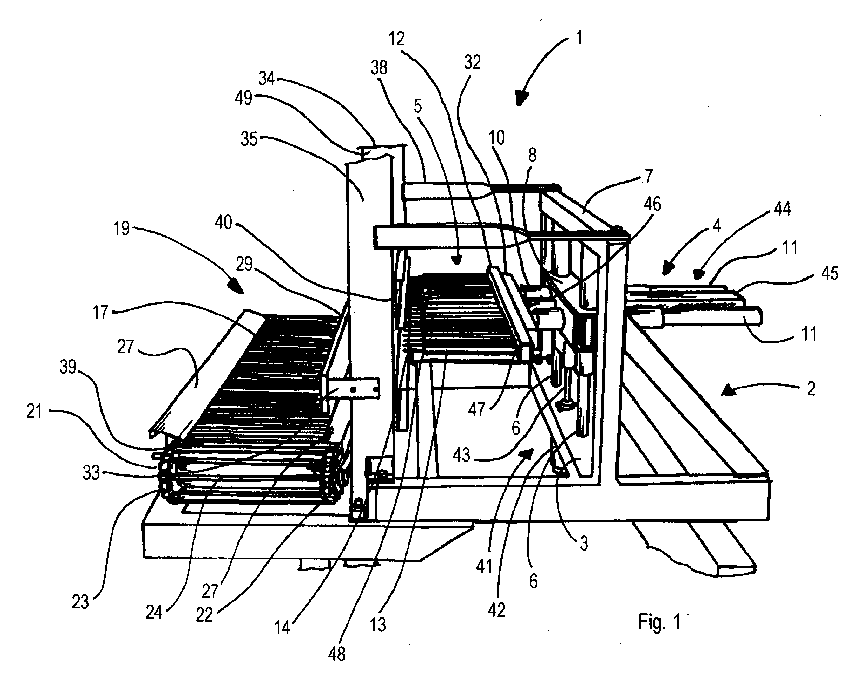

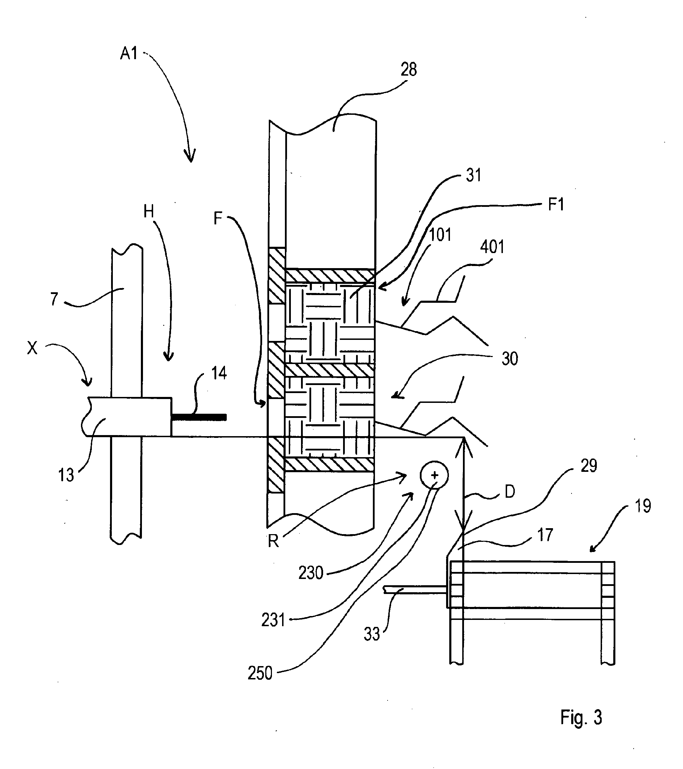

with reference to Figure 1, there is shown an apparatus 1 for extracting vegetable crops 30 from containers 28 that are provided with epigeal parts 101 intended for remaining outside the ground after planting, for example comprising stems and/or leaves 401, projecting from respective cakes of earth 31 (Figure 3).

The apparatus 1 comprises a frame 2, for example metal, provided with a tubular element 7 with a substantially inverted "U" shape.

The frame 2 furthermore comprises a substantially horizontal crosspiece 3.

A movement device 4 is further provided that is arranged for moving a plurality of extractors 5 vertically and horizontally.

In particular, the movement device 4 comprises a pair of guiding columns 6, arranged substantially vertically, each guiding column 6 comprising an end fixed to the crosspiece 3 and a further end fixed to the tubular element 7.

The movement device 4 comprises a slide 8 driven to slide on the guiding columns 6 by linear actuating means 41 comprising pneumatic cylinder means 42, fixed to the crosspiece 3, from which stem means 43 projects having an end connected to the slide 8.

With the slide 8 guiding sleeves 10 are associated inside which bars 11 are slidable, at an end of which a bracket 32 is fixed that is arranged for supporting the extractors 5.

With the slide 8 further linear actuating means 44 is associated comprising further pneumatic cylinder means 45, fixed to the slide 8, from which further stem means 46 leads away having an end connected to the bracket 32.

The extractors 5 project from a base element 12 having a parallelepipedon shape associated with the bracket 32, so as to define a row.

Each extractor 5 comprises a substantially cylindrical stem 13, provided with a first end 47 fixed to the base element 12 and with a second end 48, opposite the first end 47, provided with a needle 14 arranged for transfixing the cakes of earth 31 of the vegetable crops 30.

The frame 2 further comprises a first upright element 34 and a second upright element 35, opposite one another and interconnected by crosspiece means 40.

Both the first upright element 34 and the second upright element 35 have a "C"-shaped cross section and are provided with folded edges 16 extending along the entire length of the first upright element 34 and of the second upright element 35, arranged for retaining the containers 28.

In this way, in the first upright element 34 and in the second upright element 35 grooves 49 that face one another are defined.

The first upright element 34 and the second upright element 35 are arranged at a distance from one another that is substantially the same as the width of the containers 28, opposite ends of the containers 28 being received and retained in the grooves 49.

During operation, the containers 28 are arranged substantially vertically.

With the first upright element 34 and the second upright element 35 an abutment 17 is associated that is arranged for disengaging the vegetable crops 30 from the extractors 5.

In particular, the abutment 17 is arranged substantially transversely with respect to the first upright element 34 and to the second upright element 35 and comprises supports 33 that fix the abutment to the first upright element 34 and to the second upright element 35, for example through a threaded connection.

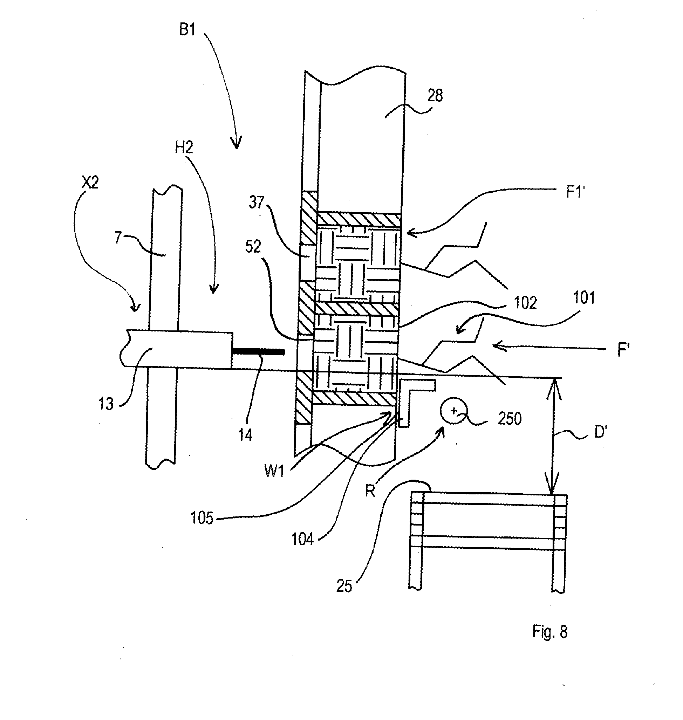

In an embodiment of the invention, illustrated in Figures 8 to 12, the apparatus 1 is provided with a further abutment 104, for example having the shape of an inverted "L", arranged for preventing the cakes of earth 31 from coming out from the containers 28, and for disengaging the cakes of earth 31 from the extractors 5.

The further abutment 104 extends substantially transversely with respect to the first upright element 34 and to the second upright element 35 and is moved and supported by driving means, that is not shown, that is associable with the frame 2.

In particular, the aforementioned driving means is arranged for moving the further abutment 104 substantially vertically, between a first operating position W1 in which the further abutment 104 is arranged for interacting with a first portion 102 of the cakes of earth 31 from which the epigeal part 101 protrudes to prevent said cakes of earth 31 from coming out from the container 28, and a second operating position W2 in which the further abutment 104 is arranged for interacting with a second portion 52 of the cakes of earth 31 for disengaging the cakes of earth 31 from the extractors 5, the second portion 52 being opposite the first portion 102.

The operation of the further abutment 104 will be disclosed in greater detail below, with particular reference to Figures 8 to 12.

Moreover, the first upright element 34 is laterally provided with a pair of pneumatic cylinders 18 arranged for supporting the containers 28 when the latter are not retained by the extractors 5, as will be explained better below.

The pneumatic cylinders 18 drive pushing means 50 arranged for pushing the containers 28 against the second upright element 35 passing through openings (not shown) obtained in the first upright element 34.

The first upright element 34 and the second upright element 35 are fixed to an end of the tubular element 7 by means of reinforcing elements 38, with the object of increasing the mechanical resistance of the apparatus 1.

The apparatus 1 further comprises a conveying device 19, arranged for receiving the vegetable crops 30 extracted from the containers 28 and conveying them to known inserting devices, which are not shown for that reason, arranged for planting the vegetable crops 30.

The inserting devices may comprise a pair of conveyor belts, positioned transversely and substantially vertically with respect to the conveying device 19 and arranged operationally below the latter, between which the vegetable crops 30 are received.

The conveyor belts deliver the vegetable crops 30 to a pair of rotating disks facing one another that plant the vegetable crops 30 in the ground.

The conveying device 19 comprises a drive shaft 20, a driven shaft 21 and a fixed plane 25.

The drive shaft 20 and the driven shaft 21 are connected together by means of first chain elements 22 and of second chain elements 23 engaging wheels associated with the drive shaft 20 and with the driven shaft 21.

The first chain elements 22 and the second chain elements 23 extend parallel to the plane 25 and on opposite sides thereof.

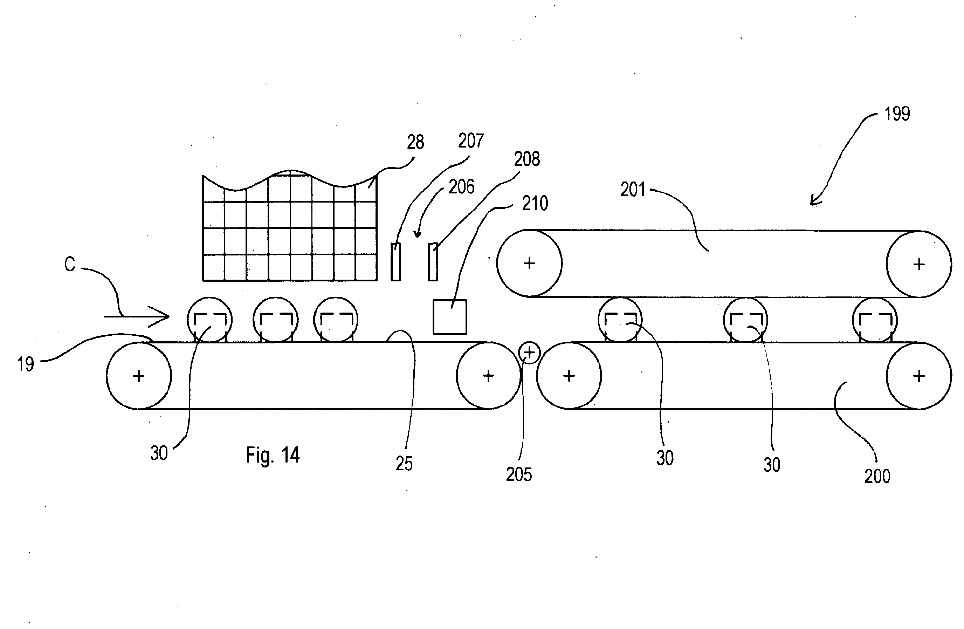

The first chain elements 22 and the second chain elements 23 comprise a plurality of meshes 39 with which a plurality of slats 24 are associated, for example cylindrical slats, extending transversely with respect to the plane 25, and thus transversely with respect to an advancing direction C (Figure 14) of the vegetable crops 30 along the conveying device 19.

Each pair of adjacent slats 24 cooperates with the plane 25 to realize a housing 26 arranged for containing and separating adjacent vegetable crops 30.

Still, the slats 24, driven by the first chain elements 22 and by the second chain elements 23, are movable with respect to the plane 25 and in the advancing direction C at an advancing speed V1.

The conveying device 19 further comprises substantially "L"-shaped protective elements 27, arranged for covering the first chain elements 22 and the second chain elements 23 so as to prevent accidental contact by a user.

In an embodiment that is not shown, the conveying device may comprise a conveyor belt from which dividing baffles lead away that are fixed to the conveyor belt arranged transversely with respect to the latter.

The dividing baffles cooperate with the conveyor belt to define housing arranged for receiving the vegetable crops 30.

The belt is closed as a loop and is tensioned between a drive roller and a driven roller.

In a further embodiment that is not shown, the conveying device may comprise a substantially smooth conveyor belt that is closed as a loop and is tensioned between respective drive rollers and driven rollers.

The apparatus 1 may also comprise a further conveying device 199, shown in Figure 14, operationally positioned downstream of the conveying device 19 with respect to the advancing direction C, between the further conveying device 199 and the conveying device 19 there being interposed wheel means 205 positioned so as to promote the transfer of the vegetable crops 30 from the conveying device 19 to the further conveying device 199.

The further conveying device 199 is movable along said advancing direction C at a further advancing speed V2 that is greater than the advancing speed V1 of the conveying device 19, so as to suitably space apart from one another the vegetable crops 30 to facilitate subsequent handling and/or planting of the latter.

The further conveying device 19 comprises a first conveyor belt 200 that is substantially coplanar with respect to the plane 25 and to the wheel means 205, and a second conveyor belt 201 operationally positioned above, and facing, the first conveyor belt 200.

In particular, the first conveyor belt and the second conveyor belt 201 cooperate to retain and convey the vegetable crops 30 in the advancing direction C at the further advancing speed V2.

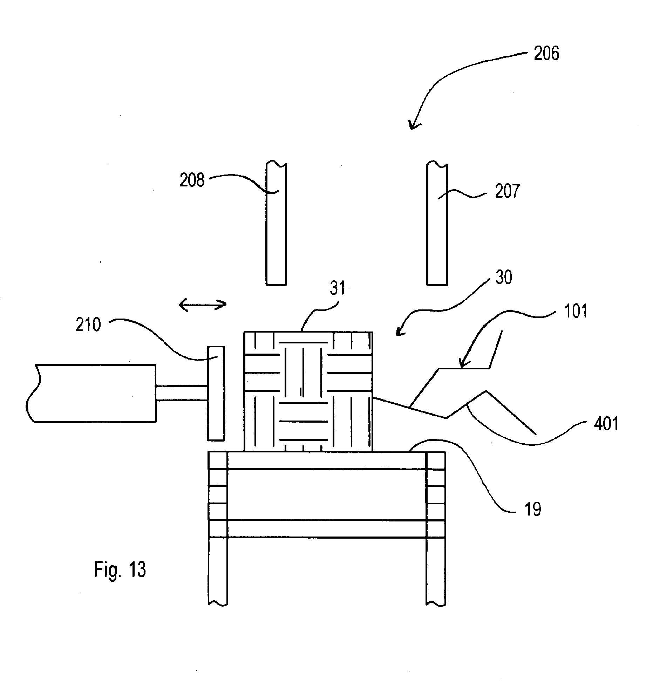

The apparatus 1 may further comprise a detecting device 206, shown in Figures 13 and 14, positioned downstream of the extractors 5 with respect to the advancing direction C.

The detecting device 206 comprises first sensor means 207 and second sensor means 208 arranged respectively for detecting the presence of the epigeal part 101 and of the cakes of earth 31, the second sensor means 208 being positioned downstream of the first sensor means 207 with respect to said advancing direction C.

The first sensor means 207 is arranged for sending a signal to a control and command device, that is not shown, if the presence of the epigeal part 101 is not detected, for example in the case of damaged vegetable crops 30.

When this occurs, the control and command device drives an expeller 210 that is moveable transversely with respect to the advancing direction C, arranged for removing a vegetable crop 30 devoid of the respective epigeal part 101, from the conveying device 19 before the vegetable crops 30 is transferred to the inserting device.

This is particularly important inasmuch as it enables the inserting device to plant only whole and undamaged vegetable crops 30.

The second sensor means 208 is on the other hand arranged for sending a signal to the control and command device if the presence of a cake of earth 31 is not detected, for example that has accidentally fallen from the container 28 before the cake of earth 31 was positioned in the apparatus 1.

When this occurs, the control and command device increases the advancing speed V1 of the conveying device 19 to compensate the absence of the cake of earth 31, and therefore of the vegetable crop 30.

This is particularly appreciable for a subsequent planting step achieved by the inserting device for making rows of vegetable crops 30 in which the latter are substantially equidistant from one another, i.e. devoid of "holes" due to the absence of a vegetable crop 30, to optimise an area of a plot of land intended for planting vegetable crops 30.

The apparatus 1 can be further provided with screen means 230 that is positionable above the conveying device 19, to prevent epigeal parts 101 of vegetable crops 30 that have already fallen on the conveying device 19 from accidentally knocking further epigeal parts 101 of further vegetable crops 30 that still have to fall onto the conveying device 19.

This enables it to be avoided that epigeal parts 101 of different rows of vegetable crops 30 interfere with one another and consequently enables the already extracted vegetable crops 30 to be removed more easily from the apparatus 1.

The screen means 230 is associable through supporting means that is not shown with the slide 8 that moves the screen means 230 vertically without interfering with the abutment 17 or with the further abutment 104.

In an embodiment of the invention that is not shown the screen means 230 comprises dedicated moving means arranged for moving it vertically.

The screen means 230 may for example comprise windable flexible screen means 250 wound on respective roller means 231 extending operationally above the plane 25 and in the advancing direction C.

The flexible screen means 250 is furthermore driven and supported by further driving means, that is not shown, between a rest position R in which the flexible screen means 250 is wound on roller means 231 and enables the vegetable crops 30 to fall on the conveying device 19, and a work position L in which the flexible screen means 250 is unwound from the roller means 231 and protrudes from the latter to the conveying device 19 so as to be operationally positioned above the plane 25 to prevent accidental contact between the vegetable crops 30 that have already fallen onto the conveying device 19 and the vegetable crops 30 that still have to fall onto the conveying device 19.

The operation of the apparatus 1 provided with the fixed abutment 17 is disclosed below with particular reference to Figures 3 to 7.

In Figure 3 the apparatus 1 is illustrated in a first operating configuration A1, in which a container 28, retained between the first upright element 34 and the second upright element 35, is arranged on a substantially vertical plane.

In an embodiment, it is possible to provide a plurality of stacked containers 28, the container 28 placed below supporting the further containers 28 resting thereupon.

The container 28 comprises recesses 36 arranged so as to define a plurality of superimposed rows.

In the first operating configuration A1, the bracket 32 is in a retracted position X, in which the extractors 5 associated therewith do not interact with the container 28.

The extractors 5 face a row F of recesses 36, each containing a vegetable crop 30 nearer the conveying device 19.

The container 28 is retained by the pneumatic cylinders 18 that press the container 28 against the second upright element 35.

In the first operating configuration A1, the slide 8 is arranged in a raised position H in which the extractors 5 are at a distance D from a pointed end 29 associated with the abutment 17.

Lastly, in the first operating configuration A1 the screen means 250 is maintained in the rest position R.

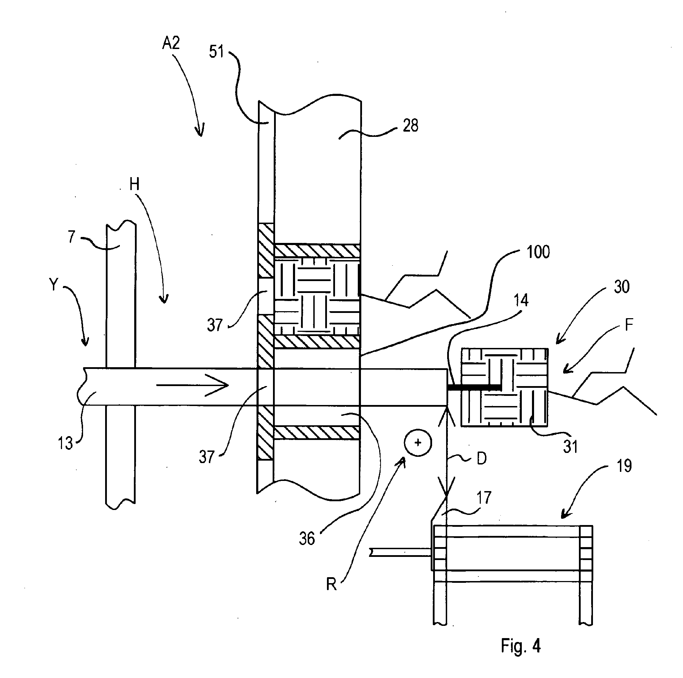

In the second operating configuration A2, shown in Figure 4, the bracket 32 is transferred to an advanced position Y, in which the stems 13 penetrate inside the recesses 36 through holes 37 obtained in a rear wall 51 of the container 28.

In the advanced position Y, the extractors 5 remove by means of the respective needles 14 the vegetable crops 30 from the recesses 36 of the row F through respective openings 100 opposite the holes 37.

In the advanced position Y, the cakes of earth 31 are on an opposite side of the abutment 17 with respect to the stems 13.

In the second operating configuration A2, the pushing means 50 of the pneumatic cylinders 18 is moved away from the container 28 and the latter is supported by the stems 13 that engage the holes 37.

In other words, the extractors 5 prevent the container 28 from sliding vertically with respect to the first upright element 34 and to the second upright element 35.

In the second operating configuration A2 the slide 8 is kept in the raised position H, whilst the screen means 250 is kept in the rest position R.

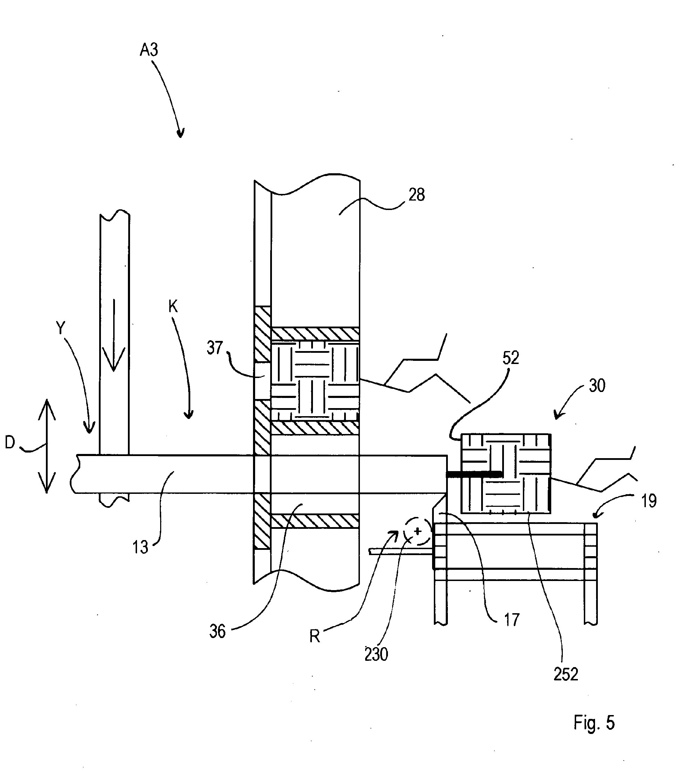

In the third operating configuration A3, shown in Figure 5, the slide 8 moves vertically downwards for a length portion equal to the distance D.

The slide 8 thus assumes a lowered position K, in which the extractors 5 move the vegetable crops 30 to the abutment 17.

In particular, a lower portion 252 of the cake of earth 31 of each vegetable crop 30 extracted from the recesses 36 of the row F is positioned in such a way as to be nearer the plane 25 with respect to the pointed end 29. In other words, the lower portion 252 is at a lower vertical position with respect to that of the pointed end 29.

Whilst the slide 8 is transferred from the raised position H to the lowered position K, the bracket 32 is kept in the advanced position Y.

In this way, the extractors 5, by moving downwards, drag the container 28.

Subsequently, the slide 8 is kept in the lowered position K, whilst the bracket 32 is recalled from the advanced position Y to the retracted position X whilst the screen means 250 is kept in the rest position R.

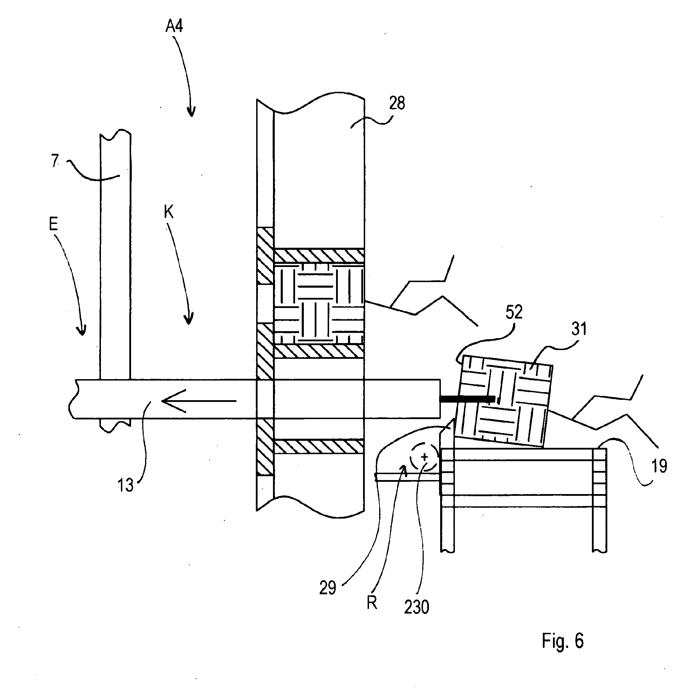

Figure 6 shows a fourth operating configuration A4, in which the bracket 32 assumes an intermediate position E between the retracted position X and the advanced position Y.

In the intermediate position E, the second portions 52 of the cakes of earth 31 are forced to interact with the pointed end 29 that induces each of the cakes of earth 31 to disengage from the respective needle 14.

In this way, the vegetable crops 30 removed from the recesses 36 of the row F are deposited gently on the conveying device 19.

In the fourth operating configuration A4 the slide 8 is kept in the lowered position K, whilst the screen means 250 is kept in the rest position R.

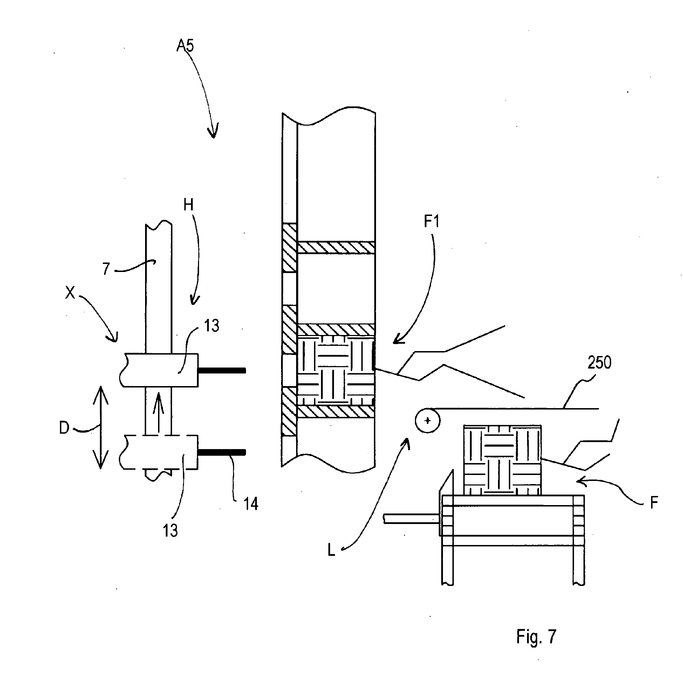

Figure 7 shows a fifth operating configuration A5, in which the bracket 32 is kept in the retracted position X, whilst the slide 8 is returned to the raised position H.

In other words, the slide 8 is moved upwards by a length portion equal to the distance D, so that the extractors 5 face a further row F1 of recesses 36 arranged immediately above the row F so that it is possible to perform a new work cycle.

Whilst the slide 8 is transferred from the lowered position K to the raised position H, the container 28 is supported by the pushing means 50 driven by the pneumatic cylinders 18.

Lastly, the vegetable crops 30 extracted from the recesses 36 are received in respective housings 26 of the conveying device 19, which transfers the vegetable crops 30 to the inserting device arranged for planting the vegetable crops 30.

Before the vegetable crops 30 are moved along the conveying device 19, the screen means 250 is positioned in the work position L, so as to protect the vegetable crops 30 from possible accidental contacts, as soon as they are removed from the row F, with further vegetable crops 30 to be extracted from the further row F1.

The operation of the apparatus 1 provided with the further movable abutment 104 is disclosed below with particular reference to Figures 8 to 12.

Figure 8 shows the apparatus 1 in a first work position B1, in which the container 28, retained between the first upright element 34 and the second upright element 35, is arranged on a substantially vertical plane.

In an embodiment, it is possible to provide a plurality of stacked containers 28, the container 28 placed below supporting the further containers 28 resting thereupon.

In the first work position B1, the bracket 32 is in a further retracted position X2, in which the extractors 5 associated therewith do not interact with the container 28.

The extractors 5 face a further row F' of recesses 36, each containing a vegetable crop 30, nearer the conveying device 19.

The container 28 is retained by the pneumatic cylinders 18 that press it against the second upright element 35.

In the first work position B1, the slide 8 is arranged in a further raised position H2 in which the extractors 5 are at a further distance D' from the plane 25.

Furthermore, in the first work position B1 the further abutment 104 is positioned in the first operating position W1 so that a first operating surface 105 thereof at least partially faces the first portion 102 of the cakes of earth 31.

Lastly, in the first work position B1 the screen means 250 is kept in the rest position R.

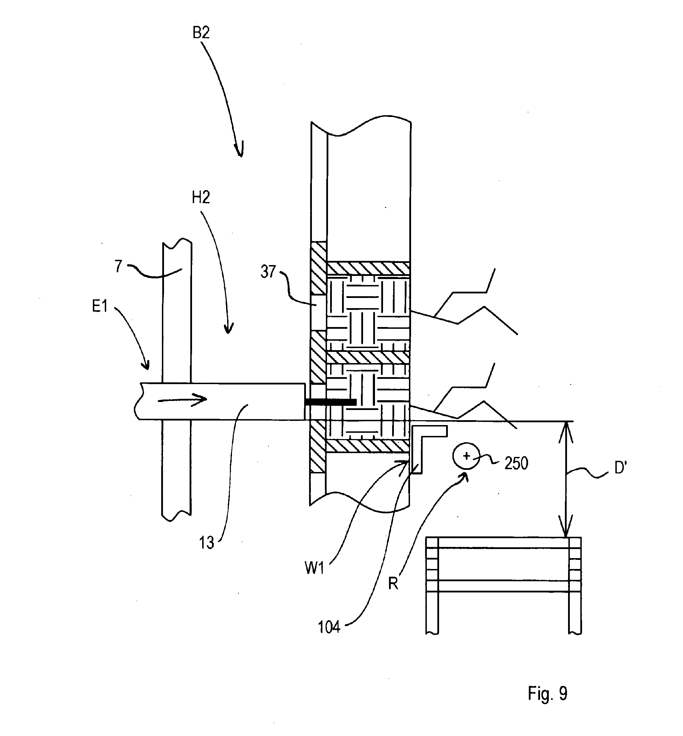

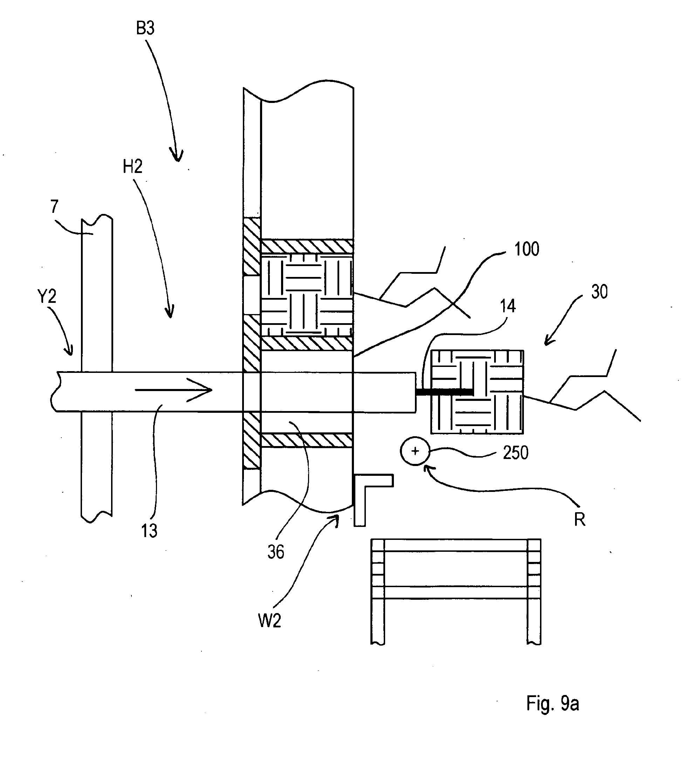

In the second work position B2, shown in Figure 9, the bracket 32 is transferred to a first intermediate position E1 in which the stems 13 penetrate inside the holes 37.

In the first intermediate position E1 the further abutment 104 is positioned in the first operating position W1, in which the first operating surface 105 is arranged to abut on the upper portion 102 of the cakes of earth 31, which promotes penetration of the needles 14 into the second portion 52 of the cakes of earth 31 and prevents the latter from emerging from the respective openings 100.

In the second work position B2, the container 28 is kept in position by the pushing means 50 of the pneumatic cylinders 18, or alternatively by the stems 13 inserted into the holes 37.

In the second work position B2 the slide 8 is kept in the further raised position H2, whilst the screen means 250 is kept in the rest position R.

In the third work position B3, shown in Figure 9a, the further abutment 104 is positioned in the second operating position W2 and the bracket 32 is transferred to a further advanced position Y2, in which the extractors 5 remove by means of the respective needles 14 the vegetable crops 30 from the recesses 36 of the further row F' through the openings 100.

In the third work position B3, the pushing means 50 of the pneumatic cylinders 18 is moved away from the container 28 and the latter is supported by the stems 13 that engage the holes 37.

In other words, the extractors 5 prevent the container 28 from sliding vertically with respect to the first upright element 34 and to the second upright element 35.

In the third work position B3 the slide 8 is kept in the further raised position H2, whilst the screen means 250 is kept in the rest position R.

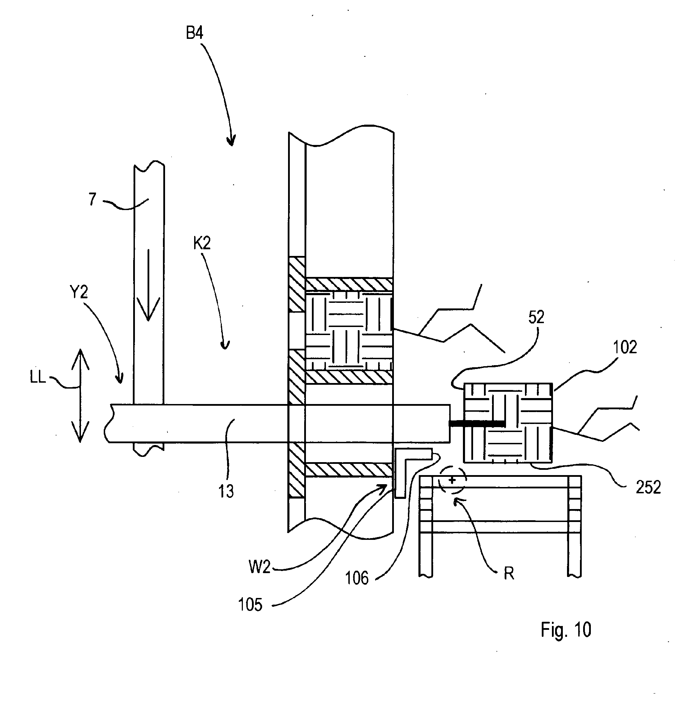

In the fourth work position B4, shown in Figure 10, the slide 8 moves vertically downwards for a length portion LL, towards the further abutment 104 kept in the second operating position W2.

The slide 8 thus assumes a further lowered position K2, in which the extractors 5 move towards the lower portion 252 at the plane 25.

In the fourth work position B4, the second portion 52 of the cakes of earth 31 substantially faces a second operating surface 106 of the further abutment 104, the second operating surface 106 being opposite the first operating surface 105.

Furthermore, the lower portion 252 is at a lower vertical position with respect to that of the second operating surface 106.

Whilst the slide 8 is transferred from the further raised position H2 to the further lowered position K2, the bracket 32 is kept in the further advanced position Y2.

In this way, the extractors 5, by moving downwards, drag the container 28.

Subsequently, the slide 8 is kept in the further lowered position K2, whilst the bracket 32 is recalled from the further advanced position Y2 to the further retracted position X2, whilst the screen means 250 is kept in the rest position R.

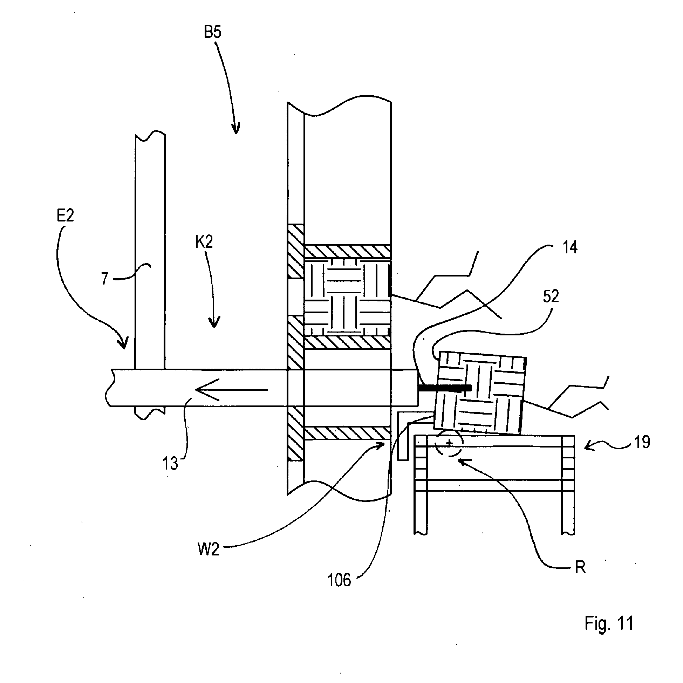

Figure 11 shows a fifth work position B5, in which the bracket 32 assumes a second intermediate position E2 between the further retracted position X2 and the further advanced position Y2.

In the second intermediate position E2, the second portion 52 of the cakes of earth 31 is forced to interact with the second operating surface 106 of the further abutment 104, which causes each of the cakes of earth 31 to disengage from the respective needle 14.

In this way, the vegetable crops 30 removed from the recesses 36 of the further row F' are deposited gently on the conveying device 19.

In the fifth work position B5 the slide 8 is kept in the further lowered position K2, whilst the screen means 250 is kept in the rest position R.

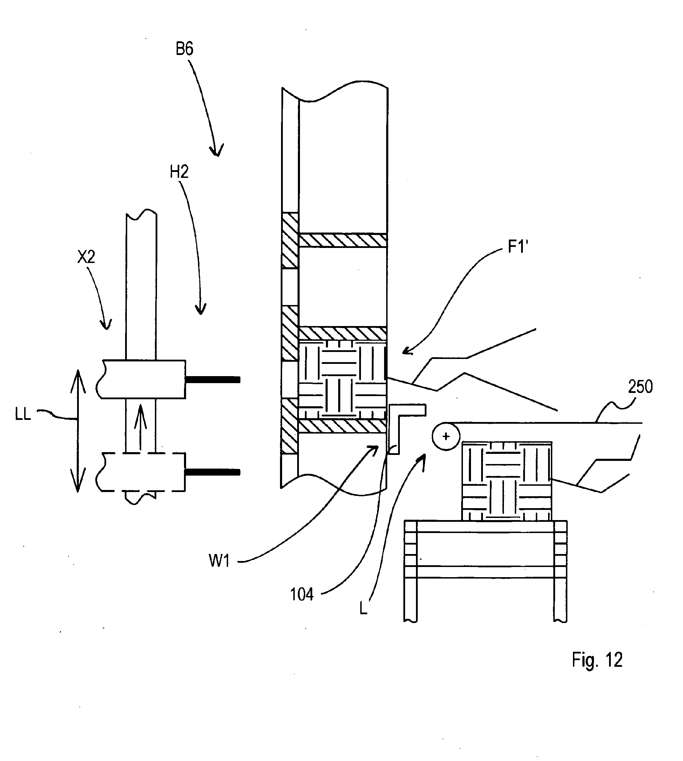

In Figure 12 è shown a sixth work position B6, in which la bracket 32 is kept in the further retracted position X2, whilst the slide 8 is returned to the further raised position H2, the further abutment 104 being repositioned in the first operating position W1.

In other words, the slide 8 is moved upwards by a further length portion equal to the length portion LL, so that the extractors 5 face a still further row F1' of recesses 36 arranged immediately above the further row F', so that it is possible to perform a new work cycle.

Whilst the slide 8 is transferred from the further lowered position K2 to the further raised position H2, the container 28 is supported by the pushing means 50 driven by the pneumatic cylinders 18.

Lastly, the vegetable crops 30 extracted from the recesses 36 are received in respective housing 26 of the conveying device 19, which transfers them to the inserting device arranged for planting the vegetable crops 30.

Before the vegetable crops 30 are moved along the conveying device 19, the screen means 250 is positioned in the work position L, so as to protect the vegetable crops 30, which have just been extracted from the row F, from possible accidental contacts with further vegetable crops 30 to be extracted from the further row F1.

The apparatus 1 is formed in such a way as to be able to be housed on a self-propelled agricultural machine, for example on a tractor or a trailer drawn by a tractor.

## Claims

1. Apparatus comprising extracting means (5) for extracting from containers (28) vegetable crops (30) provided with cakes of earth (31) inserted into recesses (36) of said containers (28), said containers (28) having a bottom wall (51) and an opening (100) opposite said bottom wall (51) from which protrudes an epigeal part (101) of said vegetable crop (30), **characterised in that** said extracting means (5) is such as to act from the exterior through said bottom wall (51) to push said cakes of earth (30) outside the respective opening (100).

2. Apparatus according to claim 1, and further comprising removing means (17, 104) for removing said vegetable crops (30) from said extracting means (5).

3. Apparatus according to claim 2, wherein said removing means comprises abutting means (17, 104) suitable for interacting with said cakes of earth (31) so as to disengage said vegetable crops (30) from said extracting means (5).

4. Apparatus according to claim 3, wherein said abutting means (17, 104) comprises first abutting means (104), movable between a first operating position (W1), in which said first abutting means (104) prevents said cakes of earth (31) from coming out from said openings (100), and a second operating position (W2), in which said first abutting means (104) interacts with said cakes of earth (31) for disengaging said cakes of earth (31) from said extracting means (5).

5. Apparatus according to claim 4, wherein said first abutting means (104) comprises a first operating surface (105) arranged for abutting in said first operating position (W1) a first portion (102) of said cakes of earth (31) from which said epigeal part (101) projects, and a second operating surface (106), arranged for abutting in said second operating position (W2) a second portion (52) of said cakes of earth (31), said second portion (52) being opposite said first portion (102).

6. Apparatus according to claim 5, wherein said first operating surface (105) is opposite said second operating surface (106).

7. Apparatus according to claim 3, wherein said abutting means (17; 104) comprises second abutting means (17) fixed to a frame (2) of said apparatus (1).

8. Apparatus according to any preceding claim, and further comprising moving means (4) arranged for moving said extracting means (5).

9. Apparatus according to claim 8, wherein said moving means (4) comprises linear actuating means (44) arranged for moving said extracting means (5) between a retracted position (X; X2), in which said extracting means (5) does not interact with said vegetable crops (30), and an advanced position (Y; Y2), in which said extracting means (5) interacts with said vegetable crops (30).

10. Apparatus according to claim 9, wherein said extracting means (5) is shaped in such a way as to penetrate, in said advanced position (Y; Y2), in said recesses (36) through hole means (37) obtained in said bottom wall (51) to push said vegetable crops (30) outside said recesses (36) through said openings (100).

11. Apparatus according to claim 9, or 10, wherein said linear actuating means (44) controls bar means (11) supporting said extracting means (5) and slidable in sleeve means (10) associated with slide means (8) that is movable along guiding means (6).

12. Apparatus according to any one of claims 8 to 11, as claim 8 is appended to any one of claims 3 to 7, wherein said moving means (4) comprises further linear actuating means (41) arranged for moving said extracting means (5) between a raised position (H; H2), in which said extracting means (5) extracts said vegetable crops (30) from said containers (28), and a lowered position (K; K2), in which said extracting means (5) draws up said vegetable crops (30) to said abutting means (17; 104).

13. Apparatus according to claim 12, wherein said further linear actuating means (41) transfers said containers (28) to said abutting means (17; 104).

14. Apparatus according to claim 12, or 13, as claim 12 is appended to claim 11, wherein said further linear actuating means (41) controls said slide means (8).

15. Apparatus according to any preceding claim, and further comprising locking means (18) arranged for supporting said containers (28).

16. Apparatus according to any preceding claim, and further comprising upright means (34, 35) provided with groove means (49) inside which said containers (28) are slidable.

17. Apparatus according to claim 16 as appended to claim 15, wherein said locking means (18) comprises pushing means (50) arranged for pressing said containers (28) against a portion (35) of said upright means (34, 35).

18. Apparatus according to claim 17, wherein said pushing means (50) passes through opening means obtained in a further portion of said upright means (34).

19. Apparatus according to any preceding claim, wherein said extracting means (5) comprises a plurality of stem means (13) arranged so as to define a row.

20. Apparatus according to claim 19, wherein with said stem means (13) there is associated needle means (14) suitable for engaging said cakes of earth (31).

21. Apparatus according to any preceding claim, and furthermore comprising conveying means (19) arranged for conveying said vegetable crops (30) in an advancing direction (C).

22. Apparatus according to claim 21, and further comprising detecting means (206) positioned downstream of said extracting means (5) with respect to said advancing direction (C) and operationally above said conveying means (19), comprising sensor means (207, 208) arranged for detecting the presence of said cakes of earth (31) and/or of said epigeal part (101).

23. Apparatus according to claim 21, or 22, and comprising expelling means (210) that is transversely movable with respect to said advancing direction (C) and arranged for removing from said conveying means (19) a vegetable crop (30) devoid of said epigeal part (101).

24. Apparatus according to any one of claims 21 to 23, and further comprising screen means (230) that is operationally positionable above said conveying means (19), said screen means (230) being positionable between a rest position (R) in which said screen means (230) enables said vegetable crops (30) to fall on said conveying means (19), and a work position (L) in which said screen means (230) prevents accidental contact between those vegetable crops (30) that have already fallen on said conveying means (19) and those vegetable crops (30) that still have to fall on said conveying means (19).

25. Apparatus according to claim 24, as claim 21 is appended to claim 11, or to any one of claims 12 to 20 as appended to claim 11, wherein said screen means (230) is associated with said slide means (8).

26. Apparatus according to claim 24, or 25, wherein said screen means (230) comprises flexible screen means (250).

27. Apparatus according to any one of claims 24 to 26, wherein in said rest position (R) said screen means (230) is rotatable around respective roller means (231).

28. Apparatus according to any one of claims 21 to 27, wherein said conveying means (19) is provided with separating means (24) arranged for keeping separate adjacent vegetable crops (30) on said conveying means (19).

29. Apparatus according to claim 28, wherein said separating means comprises separating elements (24) associated with a supporting plane (25) of said conveying means (19) arranged for supporting said vegetable crops (30).

30. Apparatus according to claim 29, wherein said separating elements (24) cooperate with said supporting plane (25) for defining housing means (26) arranged for receiving said vegetable crops (30).

31. Apparatus according to claim 29, or 30, wherein said separating elements (24) are arranged transversely with respect to said advancing direction (C).

32. Apparatus according to any one of claims 29 to 31, wherein said separating elements (24) extend between first flexible driving means (22) and second flexible driving means (23) arranged on opposite sides of said supporting plane (25).

33. Apparatus according to claim 32, wherein said first flexible driving means (22) and said second flexible driving means (23) extend substantially parallel to said advancing direction (C).

34. Apparatus according to claim 32, or 33, wherein said supporting plane comprises a fixed surface (25) with respect to said first flexible driving means (22) and to said second flexible driving means (23).

35. Apparatus according to any one of claims 32 to 34, wherein said conveying means (19) comprises motor means (20) arranged for driving said first flexible driving means (22) and said second flexible driving means (23) at an operating speed (V1).

36. Apparatus according to claim 28, wherein said separating means comprises separating elements projecting from a conveyor belt of said conveying means.

37. Apparatus according to any one of claims 21 to 36, and comprising spacer means (199) arranged for spacing said vegetable crops (30) along said advancing direction (C).

38. Apparatus according to claim 37, wherein said spacer means comprises further conveying means (199) operationally positioned downstream of said conveying means (19) with respect to said advancing direction (C).

39. Apparatus according to claim 38, as claim 37 is appended to claim 35, wherein said further conveying means (199) comprises further motor means arranged for driving said further conveying means (199) along said advancing direction (C) at a further operating speed (V2), said further operating speed (V2) being greater with respect to said operating speed (V1).

40. Apparatus according to claim 38, or 39, as claim 37 is appended to any one of claims 29 to 35, wherein said further conveying means (199) comprises a first conveyor belt (200) that is substantially coplanar with said supporting plane (25).

41. Apparatus according to claim 40, wherein said further conveying means (199) comprises a second conveyor belt (201), operationally positioned above said first conveyor belt (200), arranged for cooperating with said first conveyor belt (200) for retaining and conveying said vegetable crops (30) along said advancing direction (C).

42. Apparatus comprising extracting means (5) for extracting from containers (28) vegetable crops (30) provided with cakes of earth (31) and removing means (17, 104) for removing said vegetable crops (30) from said extracting means (5) and delivering said vegetable crops (30) to conveying means (19), **characterised in that** said conveying means (19) is provided with separating means (24) for keeping separate adjacent vegetable crops (30) on said conveying means (19).

43. Apparatus according to claim 42, wherein said separating means comprises separating elements (24) associated with a supporting plane (25) of said conveying means (19) arranged for supporting said vegetable crops (30).

44. Apparatus according to claim 43, wherein said separating elements (24) cooperate with said supporting plane (25) for defining housing means (26) arranged for receiving said vegetable crops (30).

45. Apparatus according to claim 43, or 44, wherein said separating elements (24) are arranged transversely with respect to an advancing direction (C) of said vegetable crops (30) along said supporting plane (25).

46. Apparatus according to any one of claims 43 a 45, wherein said separating elements (24) extend between first flexible driving means (22) and second flexible driving means (23) arranged on opposite sides of said supporting plane (25).

47. Apparatus according to claim 46 as appended to claim 45, wherein said first flexible driving means (22) and said second flexible driving means (23) extend substantially parallel to said advancing direction (C).

48. Apparatus according to claim 46, or 47, wherein said supporting plane comprises a fixed surface (25) with respect to said first flexible driving means (22) and to said second flexible driving means (23).

49. Apparatus according to any one of claims 46 to 48, wherein said conveying means (19) comprises motor means (20) arranged for driving said first flexible driving means (22) and said second flexible driving means (23) at an operating speed (V1).

50. Apparatus according to claim 42, wherein said separating means comprises separating elements projecting from a conveyor belt of said conveying means.

51. Apparatus according to any one of claims 45 to 49 as claim 46 is appended to claim 45, and comprising spacer means (199) arranged for spacing said vegetable crops (30) along said advancing direction (C).

52. Apparatus according to claim 51, wherein said spacer means comprises further conveying means (199) operationally positioned downstream of said conveying means (19) with respect to said advancing direction (C).

53. Apparatus according to claim 52, as claim 51 is appended to claim 49, wherein said further conveying means (199) comprises further motor means arranged for driving said further conveying means (199) along said advancing direction (C) at a further operating speed (V2), said further operating speed (V2) being greater with respect to said operating speed (V1).

54. Apparatus according to claim 52, or 53, wherein said further conveying means (199) comprises a first conveyor belt (200) that is substantially coplanar with said supporting plane (25).

55. Apparatus according to claim 54, wherein said further conveying means (199) comprises a second conveyor belt (201), operationally positioned above first conveyor belt (200), arranged for cooperating with said first conveyor belt (200) for retaining and conveying said vegetable crops (30) along said advancing direction (C).
